# EUROPÄISCHE PATENTSCHRIFT

(11) **EP 4 399 494 B1**
(45) Veröffentlichungstag und Bekanntmachung des Hinweises auf die Patenterteilung: **23.07.2025**
(21) Anmeldenummer: 23723901.7
(22) Anmeldetag: 02.05.2023
(51) Int. Cl.: G01F 1/667, G01F 1/66, G01F 15/00, G01F 15/18

(54) **DURCHFLUSSEINRICHTUNG ZUM ANORDNEN AN EINER FLUIDFÜHRENDEN LEITUNG UND ZUM ANBRINGEN EINER DURCHFLUSSMESSEINRICHTUNG, VERWENDUNG EINER DURCHFLUSSEINRICHTUNG**
FLOW-THROUGH DEVICE FOR ARRANGING ON A FLUID-CONDUCTING LINE AND FOR ATTACHING A FLOWMETER, AND USE OF A FLOW-THROUGH DEVICE
DISPOSITIF D'ÉCOULEMENT DEVANT ÊTRE AGENCÉ SUR UNE LIGNE DE CONDUITE DE FLUIDE ET FIXÉ À UN DÉBITMÈTRE, ET UTILISATION D'UN DISPOSITIF D'ÉCOULEMENT

(30) Priorität: 04.05.2022 EP 22171522
(43) Veröffentlichungstag der Anmeldung: 17.07.2024
(73) Patentinhaber: Sartorius Stedim Biotech GmbH, 37079 Göttingen (DE)
(72) Erfinder: BODE, Matthias, 37434 Krebeck-Renshausen (DE); AUE, Norbert, 37120 Bovenden (DE); GÖTEMANN, Sina, 37120 Bovenden (DE); SANTOS DE MATOS FORTUNA, Ana Raquel, 37085 Göttingen (DE); FIRNEISEN, Svenja, 37124 Rosdorf (DE)
(74) Vertreter: Novagraaf International SA
(86) Internationale Anmeldenummer: PCT/EP2023/061465
(87) Internationale Veröffentlichungsnummer: WO 2023/213771

(56) Entgegenhaltungen:
- US-A1- 2005 215 901
- US-A1- 2015 300 861
- US-A1- 2019 285 450
- US-B1- 11 266 378

## Beschreibung

Die vorliegende Erfindung betrifft eine Durchflusseinrichtung zum Anordnen an einer fluidführenden Leitung und zum Anbringen einer Durchflussmesseinrichtung zur Erfassung einer Messgröße des von der Leitung geführten Fluids sowie die Verwendung einer Durchflusseinrichtung.

Bei einer Vielzahl von Verfahren in der Automation industrieller oder labortechnischer Prozesse werden Durchflussmessungen in Leitungs-, Rohr- und Schlauchsystemen zur Kontrolle der Prozesse durchgeführt. Für Durchflussmessungen kommen dabei unter anderem In-Line-Durchflussmessvorrichtungen und Clamp-On-Durchflussmessvorrichtungen zum Einsatz. Bei In-Line- Durchflussmessvorrichtungen werden Messsensoren im Strömungsprofil des zu messenden Fluids bzw. Mediums angebracht, wohingegen Clamp-On-Durchflussmessvorrichtungen von außen auf eine Leitung, ein Rohr oder einen Schlauch, welche das Fluid bzw. Medium führen, aufgesetzt und festgeklemmt werden.

Ferner sind Clamp-On-Durchflussmessvorrichtungen bekannt, bei denen eine Durchflusseinrichtung in einem das Fluid bzw. Medium führenden Kunststoffschlauch eingebaut wird, so dass das Fluid bzw. Medium die Durchflusseinrichtung durchströmt. An diese Durchflusseinrichtung wird eine Durchflussmessvorrichtung befestigt, die ein geeignetes Eingabesignal, bspw. ein Ultraschallsignal, in die in dem Kunststoffschlauch eingebaute Durchflusseinrichtung eingibt und anhand eines über die Durchflusseinrichtung erhaltenen Ausgabesignals, welches auf dem Eingabesignal basiert, die Durchflussmessung durchführt.

Ferner ist aus der US 2015/300861 A1 eine Vorrichtung zum Einbau in ein Schlauch- und/oder Kunststoffrohrsystem und Anbringen von Durchflussmesssensoren bekannt.

Der vorliegenden Erfindung liegt die Aufgabe zugrunde, eine Durchflusseinrichtung zum Anordnen an einer fluidführenden Leitung und zum Anbringen einer Durchflussmesseinrichtung, zur Erfassung einer Messgröße des von der Leitung geführten Fluids sowie eine Verwendung der Durchflusseinrichtung vorzuschlagen, welche eine möglichst genaue Erfassung der Messgröße ermöglichen.

Diese Aufgabe wird durch die Gegenstände der unabhängigen Ansprüche gelöst. Bevorzugte Ausführungsformen sind in den abhängigen Ansprüchen gelöst.

Eine Ausführungsform betrifft ein System zur Erfassung einer Messgröße des von einer fluidführenden Leitung geführten Fluids, wobei das System aufweist:
- eine Durchflussmesseinrichtung, insbesondere eine Ultraschall-Durchflussmesseinrichtung, zur Erfassung der Messgröße,
- eine Durchflusseinrichtung zum Anordnen an der fluidführenden Leitung und zum Anbringen der Durchflussmesseinrichtung zur Erfassung der Messgröße des von der Leitung geführten Fluids, wobei die Durchflusseinrichtung aufweist:
- einen ersten und einen zweiten Anschluss, mittels derer die Durchflusseinrichtung mit der fluidführenden Leitung verbindbar ist,
- einen zwischen dem ersten Anschluss und dem zweiten Anschluss angeordneten Messbereich, der mit der Durchflussmesseinrichtung zum Erfassen der Messgröße koppelbar ist, wobei der erste Anschluss, der Messbereich und der zweite Anschluss eine Durchflussstrecke für das Fluid durch die Durchflusseinrichtung festlegen,

wobei der Messbereich mindestens zwei Kontaktflächen, die sich zumindest abschnittsweise entlang der Durchflussstrecke erstrecken, zum Kontaktieren der Durchflussmesseinrichtung aufweist,
wobei die mindestens zwei Kontaktflächen dazu ausgelegt sind, bei Einwirken eines Anpressdrucks ein Kopplungsmittel abzusondern, und
wobei die Durchflussmesseinrichtung derart ausgebildet ist, dass durch Kopplung der Durchflussmesseinrichtung mit dem Messbereich, die Durchflussmesseinrichtung mindestens den Anpressdruck auf die mindestens zwei Kontaktflächen ausübt.

Das Absondern des Kopplungsmittels ermöglicht eine verbesserte Signalübertragung zwischen der Durchflussmesseinrichtung und den Kontaktflächen, was zu einer besseren Erfassung der Messgröße führt. Insbesondere bei einer Ultraschall-Durchflussmesseinrichtung, bei der die Durchflussmesseinrichtung ein Eingabesignal, bevorzugt ein Ultraschallsignal, über die Kontaktflächen in den Messbereich einkoppelt, und ein auf dem Eingabesignal basierendes Ausgabesignal empfängt, führt das Kopplungsmittel zu einer besseren Signalübertragung im Signalweg. Insbesondere reduziert das Kopplungsmittel, welches vorzugsweise flüssig ist, Gasphasen im Signalweg. Gasphasen im Signalweg entstehen insbesondere durch Hohlräume, die mit einem gasförmigen Fluid, beispielsweise Umgebungsluft gefüllt sind, und zwischen den Kontaktflächen und der Durchflussmesseinrichtung liegen. Durch das Absondern des Kontaktmittels kann das gasförmige Fluid durch das Kopplungsmittel verdrängt werden, sodass nunmehr eine flüssige Phase im Signalweg vorliegt, die die Signalübertragung verbessert.

Insbesondere können der erste und zweite Anschluss sowie der zwischen dem ersten und zweiten Anschluss angeordnete Messbereich einen Kanal bzw. Strömungskanal aufweisen, der die Durchflussstrecke definiert und durch welchen das Fluid bzw. Medium strömt. Als fluidführende Leitung, welche mit dem ersten und zweiten Anschluss verbindbar sind, können beispielhaft Rohre oder Schläuche vorgesehen sein, welche beispielsweise aus Kunststoff gefertigt sind. Beispielsweise kann zum Anbringen der Durchflusseinrichtung an der Leitung vorgesehen sein, die Leitung zu trennen, so dass ein erstes offenes Ende der Leitung mit dem ersten Anschluss verbunden wird und ein zweites offenes Ende der Leitung mit dem zweiten Anschluss verbunden wird, so dass die Durchflusseinrichtung das erste offene Ende und das zweite offene Ende der Leitung miteinander verbindet.

Vorzugsweise ist die Durchflussstrecke bzw. der Kanal länglich ausgebildet und verläuft im Wesentlichen geradlinig. Insbesondere kann vorgesehen sein, dass die Durchflusstrecke nicht gebogen oder gekrümmt ist, beispielsweise keinen 90°-Knick aufweist, so dass die Haupt-Durchflussrichtung des Fluids bzw. des Mediums durch die Durchflusseinrichtung hindurch im Wesentlichen gleichbleibend ist.

Das Fluid bzw. Medium kann insbesondere flüssig sein, wobei das Fluid bzw. Medium auch feste Bestandteile, wie Partikel oder Zellbestandteile, aufweisen kann. Allerdings ist die Erfindung nicht auf Fluide in flüssiger Form beschränkt.

Die Durchflusseinrichtung und/oder die Durchflussmesseinrichtung werden insbesondere bei der Überwachung industrieller und/oder labortechnischer Prozesse eingesetzt und dienen der Überwachung der Prozesse basierend auf einer Durchflussmessung eines Fluids oder Mediums, welche durch Leitungs-, Rohr- und/oder Schlauchsysteme strömt. Die Durchflusseinrichtung kann dabei insbesondere als Single-Use (SU) Vorrichtung verwendet werden.

Vorzugsweise kann die Durchflussmesseinrichtung ein Eingabesignal, bspw. ein Ultraschallsignal, in den Messbereich, bevorzugt über eine Kontaktfläche der mindestens zwei Kontaktflächen, einkoppeln und über den Messbereich, bevorzugt über ein andere Kontaktfläche der mindestens zwei Kontaktflächen, ein auf dem Eingabesignal basierendes Ausgabesignal empfangen. Anhand des Eingabe- und Ausgabesignals kann die Durchflussmesseinrichtung eine für die Durchflussmessung, bspw. eine Volumendurchfluss- oder Massendurchfluss-Messung, relevante Messgröße erfassen.

Vorzugsweise kann vorgesehen sein, dass die mindesten zwei Kontaktflächen ein Elastomer und/oder thermoplastisches Elastomer umfassen, wobei optional das thermoplastische Elastomer aus der Gruppe, bestehend aus Polyetherblockamiden (thermoplastische Polyether Block Amide (TPA)), (Co)Polyestern (thermoplastische Copolyester Elastomere (TPC)), Polyurethanen (thermoplastische Polyurethan Elastomere (TPU)), Polyolefinen (thermoplastische Polyolefine (TPO)), vernetzten thermoplastischen Elastomeren (thermoplastische Elastomere aus Thermoplasten und vulkanisiertem Elastomer (TPV)), Styrol-Blockcopolymeren (thermoplastische Elastomere basierend auf Styrol-Blockcopolymeren (TPS)) und Silikonen, einzeln oder in Kombination ausgewählt ist. Gemäß einer bevorzugten Ausführungsform umfassen die mindestens zwei Kontaktflächen ein Styrol-Blockcopolymer (TPS).

Die vorgenannten Materialien ermöglichen, dass die Kontaktflächen bei einem auf die Kontaktfläche wirkenden Anpressdruck, der mittels der Durchflussmesseinrichtung auf die Kontaktflächen ausgeübt wird, das Kopplungsmittel absondern.

Gemäß der vorliegenden Erfindung können die Kontaktflächen als eine Beschichtung auf einem Grund- bzw. Messkörper ausgebildet sein. Eine solche Beschichtung kann beispielsweise als Umspritzung des Grundkörpers ausgebildet sein. Gemäß einer bevorzugten Ausführungsform umfasst der Grundkörper Polybutylenterephthalat. Die Beschichtung kann erfindungsgemäß sowohl massiv, porös als auch schwammartig ausgebildet sein, wobei die massive Ausführungsform bevorzugt ist.

Vorzugsweise ist vorgesehen, dass der von der Durchflussmesseinrichtung auf die Kontaktfläche ausgeübte Anpressdruck mindestens etwa 0,7 N/mm², bevorzugt mindestens etwa 1 N/mm² und besonders bevorzugt mindestens etwa 1,3 N/mm² beträgt. Vorteilhafterweise erlauben die Anpressdrücke, dass die Kontaktflächen das Kopplungsmittel absondern. Ferner können höherer Anpressdrücke zu einer zeitlich schnelleren Absonderung des Kopplungsmittels führen. Der Anpressdruck muss nicht vollflächig auf die Kontaktfläche(n) ausgeübt werden. Insbesondere kann der Anpressdruck punktuell oder abschnittsweise auf die Kontaktfläche(n) ausgeübt werden.

Ferner kann vorgesehen sein, dass die mindesten zwei Kontaktflächen, welche ein Styrol-Blockcopolymer aufweisen, einer Gamma oder Röntgen-Bestrahlung ausgesetzt wurden. Vorteilhafterweise ermöglicht die Gamma oder Röntgen-Bestrahlung, dass der notwendige Anpressdruck, bei dem das Kopplungsmittel durch die Kontaktflächen abgesondert wird, reduziert werden kann.

Vorzugsweise kann vorgesehen sein, dass die Durchflussmesseinrichtung eine Aufnahme für den Messbereich aufweist, wobei in einem geöffneten Zustand der Durchflussmesseinrichtung der Messbereich von der Aufnahme aufnehmbar ist und/oder von der Aufnahme entnehmbar ist, und wobei in einem geschlossenen Zustand der Durchflussmesseinrichtung der Messbereich zumindest abschnittsweise entlang der Durchflussstrecke von der Durchflussmesseinrichtung umschlossen ist. Des Weiteren kann vorgesehen sein, dass im geschlossenen Zustand der Durchflussmesseinrichtung, die Durchflussmesseinrichtung den Anpressdruck zumindest abschnittsweise auf die mindestens zwei Kontaktflächen ausübt. Insbesondere kann die Durchflussmesseinrichtung eine Sensorik, beispielsweise einen Ultraschallwandler, aufweisen, der in der Aufnahme angeordnet ist, wobei der Anpressdruck insbesondere auf den oder die Bereiche der mindestens zwei Kontaktflächen ausgeübt wird, welcher oder welche im Signalweg der Sensorik liegen. Vorzugsweise kann der Anpressdruck im Wesentlichen halbflächig auf die mindestens zwei Kontaktflächen ausgeübt werden. In einer weiteren bevorzugten Ausführungsform kann der Anpressdruck im Wesentlichen vollflächig auf die mindestens zwei Kontaktflächen ausgeübt werden.

Vorzugsweise können die Kontaktflächen außenseitig an dem Messbereich angeordnet sein, wobei der Normalenvektor der Kontaktflächen bevorzugt im Wesentlichen senkrecht zur Längsachse der Durchflusseinrichtung bzw. Haupt-Durchflussrichtung des Fluids durch die Durchflusseinrichtung verläuft. Bevorzugt sind die mindestens zwei Kontaktflächen bezogen auf die Durchflussstrecke gegenüberliegend angeordnet.

Vorzugsweise kann vorgesehen sein, dass der Messbereich quer zur Durchflussstrecke gesehen ein Übermaß gegenüber der Aufnahme der Durchflussmesseinrichtung im geschlossenen Zustand der Durchflussmesseinrichtung aufweist. Vorteilhafterweise führt das Übermaß des Messbereichs dazu, dass durch Schließen der Durchflussmesseinrichtung die Aufnahme der Durchflussmesseinrichtung einen entsprechenden Anpressdruck auf die Kontaktflächen ausüben kann. Beispielsweise kann die Querschnittsfläche der Aufnahme der Durchflussmesseinrichtung für den Messbereich kleiner sein als die Querschnittsfläche des Messbereichs. Alternativ oder optional kann der Abstand der Außenseiten der mindestens zwei Kontaktflächen größer sein als der entsprechende Abstand der Innenseiten der Aufnahme der Durchflussmesseinrichtung. Das Übermaß kann insbesondere in einem Bereich von 0,5% bis 2%, gesehen auf die Querschnittsfläche des Messbereichs oder gesehen auf den Abstand der Außenseiten der mindestens zwei Kontaktflächen, sein. Vorzugsweiße kann das Übermaß über die gesamte Länge der Kontaktflächen bestehen.

Vorzugsweise kann vorgesehen sein, dass der Messbereich sechs Kontaktflächen aufweist, die sich zumindest abschnittsweise entlang der Durchflussstrecke erstrecken, wobei die sechs Kontaktflächen derart zueinander angeordnet sind, dass die Durchflusstrecke einen im Wesentlichen hexagonalen Querschnitt, bevorzugt gleichseitigen hexagonalen Querschnitt, aufweist.

Vorzugsweise kann vorgesehen sein, dass die Aufnahme im geschlossenen Zustand der Durchflussmesseinrichtung einen im Wesentlichen hexagonalen Querschnitt, bevorzugt gleichseitigen hexagonalen Querschnitt, aufweist. Insbesondere kann die Aufnahme komplementär zu dem Messbereich bzw. den Kontaktflächen ausgebildet sein.

Vorzugsweise kann vorgesehen sein, dass der Messbereich einen bevorzugt monolithisch ausgebildeten Messkörper aufweist, an dem die Kontaktflächen angebracht bzw. angeordnet sind. Insbesondere kann der Messkörper mit den Kontaktflächen beschichtet sein. Der Messkörper kann ferner einen Kanal aufweisen, der einen Teil der Durchflussstrecke bildet. Insbesondere kann der Messkörper zumindest abschnittsweise entlang der Haupt-Durchflussrichtung vollumfänglich von den Kontaktflächen, insbesondere den sechs Kontaktflächen, umschlossen sein. Die Kontaktflächen können insbesondere flach ausgebildet sein, d.h., die Länge und Breite der Kontaktflächen ist wesentlich größer als deren Dicke. Die Kontaktflächen können insbesondere eine minimale Dicke von etwa 1,2 mm und eine maximale Dicke von etwa 1,5 mm aufweisen. Ferner können die Kontaktflächen jeweils eine Fläche von ungefähr 30 mm² bis 200 mm², bevorzugt von ungefähr 40 mm² bis 160 mm², aufweisen.

Vorzugsweise kann vorgesehen sein, dass der Messkörper bei Einwirkung des Anpressdrucks im Wesentlichen formstabil ist. Vorteilhafterweise ermöglicht die formstabile Ausgestaltung des Messkörpers, dass der Messkörper aufgrund des Anpressdrucks nicht verformt wird, und der auf die Kontaktflächen wirkende Anpressdruck aufrechterhalten werden kann. Der Messkörper kann insbesondere aus einem thermoplastischen Kunststoff, insbesondere aus Polybutylenterephthalat (PBT), hergestellt sein. Der Messkörper kann bevorzugt durch ein Spritzgussverfahren hergestellt werden, wofür sich Polybutylenterephthalat als Material für den Messkörper besonders gut eignet.

Vorzugsweise kann vorgesehen sein, dass das Kopplungsmittel einen flüssigen oder sich unter Druck verflüssigenden äußeren Weichmacher und/oder Extender umfasst, wobei optional der flüssige oder sich unter Druck verflüssigende äußere Weichmacher und/oder Extender ölartig ist. Unter ölartig wird eine organische Flüssigkeit, die sich nicht mit Wasser mischt, verstanden. Insbesondere kann das Kopplungsmittel aus der Gruppe, bestehend aus Bis(2-ethylhexyl)phthalat, Mesamoll, Mesamoll II, Paraffin/Mineralöl, Polysiloxan bzw. Silikonöl, einzeln oder in Kombination ausgewählt sein. Gemäß einer bevorzugten Ausführungsform wird aus dem erfindungsgemäßen thermoplastischen Elastomer (TPE) Weißöl bzw. Paraffin extrahiert bzw. abgesondert.

Vorzugsweise kann vorgesehen sein, dass die Durchflussmesseinrichtung ein erstes Gehäuseteil und ein zweites Gehäuseteil, welches relativ zu dem ersten Gehäuseteil bewegbar ist, aufweist, und wobei das erste und zweite Gehäuseteil zusammen die Aufnahme für den Messbereich bzw. Messkörper bilden. Bevorzugt können das erste Gehäuseteil und/oder zweite Gehäuseteil eine Ausnehmung aufweisen, die die Aufnahme bilden.

Der erste Anschluss, der zweite Anschluss und der Messbereich bzw. Messkörper können einteilig ausgebildet sind, bspw. als Spritzgussteil. Alternativ kann vorgesehen sein, dass der erste Anschluss und der zweite Anschluss lösbar mit dem Messbereich verbindbar sind. Dabei kann die Durchflusseinrichtung Sicherungselemente aufweisen, mit denen der erste Anschluss und der zweite Anschluss lösbar mit dem Messbereich verbindbar bzw. an diesem sicherbar sind.

Ferner können der erste Anschluss und der zweite Anschluss dazu ausgebildet sein, dass die Leitung selbstsichernd an den Anschlüssen befestigbar ist. So kann der erste und zweite Anschluss jeweils als Schlaucholive bzw. Schlauchstachel ausgebildet sein, um die Leitung an dem ersten und/oder zweiten Anschluss zu befestigen.

Die Erfindung betrifft eine Durchflusseinrichtung zum Anordnen an einer fluidführenden Leitung und zum Anbringen einer Durchflussmesseinrichtung, insbesondere einer Ultraschall-Durchflussmesseinrichtung, zur Erfassung einer Messgröße des von der Leitung geführten Fluids, wobei die Durchflusseinrichtung aufweist:
- einen ersten und einen zweiten Anschluss, mittels derer die Durchflusseinrichtung mit der fluidführenden Leitung verbindbar ist,
- einen zwischen dem ersten Anschluss und dem zweiten Anschluss angeordneten Messbereich, der mit der Durchflussmesseinrichtung zum Erfassen der Messgröße koppelbar ist, wobei der erste Anschluss, der Messbereich und der zweite Anschluss eine Durchflussstrecke für das Fluid durch die Durchflusseinrichtung festlegen,

wobei der Messbereich mindestens zwei Kontaktflächen, die sich zumindest abschnittsweise entlang der Durchflussstrecke erstrecken, zum Kontaktieren der Durchflussmesseinrichtung aufweist,
wobei die mindestens zwei Kontaktflächen dazu ausgelegt sind, bei Einwirken eines Anpressdrucks ein Kopplungsmittel abzusondern.

Die Durchflusseinrichtung kann ferner gemäß dem ersten Aspekt fortgebildet sein.

Ein zweiter Aspekt betrifft eine Verwendung einer Durchflusseinrichtung nach einem der Ansprüche 1 bis 9 zur Erfassung einer Messgröße des von einer fluidführenden Leitung geführten Fluids, wobei vorgesehen ist:
- Anordnen der Durchflusseinrichtung an der Leitung;
- Anbringen einer Durchflussmesseinrichtung an dem Messbereich, wobei durch das Anbringen der Durchflussmesseinrichtung an dem Messbereich, die Durchflussmesseinrichtung mindestens den Anpressdruck auf die Kontaktflächen ausübt.

Ferner kann die Verwendung die Durchführung einer Durchflussmessung mittels der der Durchflussmesseinrichtung vorsehen.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: eine Draufsicht einer Durchflusseinrichtung zum Anordnen an einer fluidführenden Leitung und zum Anbringen einer Durchflussmesseinrichtung, und
- Figur 2: eine Querschnittsansicht der Durchflusseinrichtung.

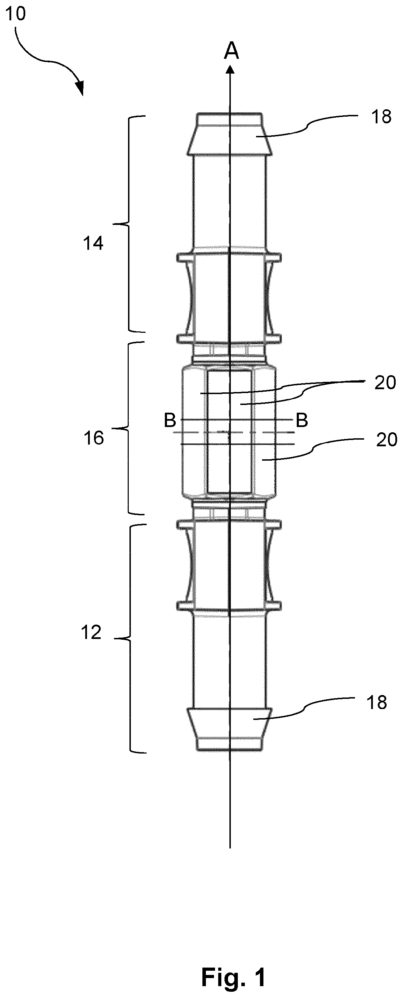

**Figur 1** zeigt eine Draufsicht einer Durchflusseinrichtung 10 zum Anordnen an einer fluidführenden Leitung (nicht dargestellt) und zum Anbringen einer Durchflussmesseinrichtung (nicht dargestellt). Die Durchflusseinrichtung 10 weist einen ersten und zweiten Anschluss 12/14 auf, mit dem die Durchflusseinrichtung 10 an einer fluidführenden Leitung bzw. zwischen zwei fluidführenden Leitungen angeordnet werden kann. Beispielsweise kann der erste Anschluss 12 mit einer fluidführenden Leitung, wie einem Kunststoffschlauch, verbunden werden, wobei mittels der Leitung der Durchflusseinrichtung 10 ein Fluid bzw. Medium zugeführt werden kann. Ferner kann der zweite Anschluss 14 ebenfalls mit einer fluidführenden Leitung verbunden werden, in die das Fluid bzw. Medium aus der Durchflusseinrichtung 10 über den zweiten Anschluss 14 einströmt. Insbesondere kann vorgesehen sein, dass das Fluid in flüssiger Form vorliegt, wobei auch feste Partikel, wie beispielsweise Zellteile in dem Fluid vorhanden sein können. Der erste und zweite Anschluss 12/14 können jeweils derart ausgebildet sein, dass die Leitung selbstsichernd an den Anschlüssen 12/14 befestigbar ist. Beispielsweise können der erste und zweite Anschluss 12/14 jeweils als Schlaucholive bzw. Schlauchstachel 18 ausgebildet sein.

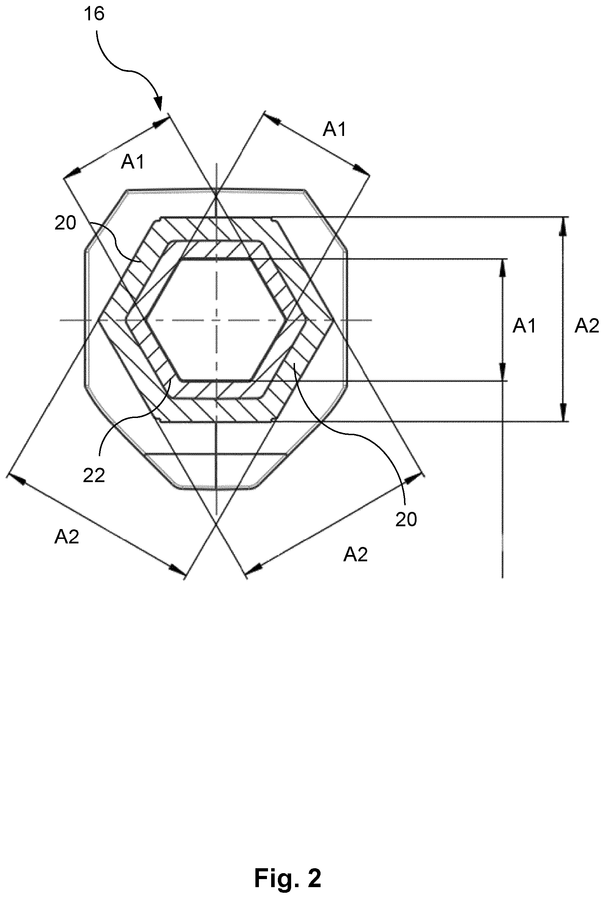

Zwischen dem ersten und zweiten Anschluss 12/14 ist ein Messbereich 16 angeordnet, an welchem die Durchflussmesseinrichtung (nicht gezeigt) angeordnet werden kann bzw. mit dem die Durchflussmesseinrichtung koppelbar ist. Der erste Anschluss 12, der Messbereich 16 und der zweite Anschluss 14 legen dabei eine Durchflussstrecke A fest, durch welche ein Fluid bzw. Medium durch die Durchflusseinrichtung 10 hindurchströmen kann. Der erste Anschluss 12, der Messbereich 16 und der zweite Anschluss 14 können insbesondere einen Kanal bzw. Strömungskanal 24 (siehe Figur 2) ausbilden, der die Durchflussstrecke A festlegt. Die Durchflussstrecke A bzw. der Kanal 24 können insbesondere länglich ausgebildet sein. Vorzugsweise verläuft die Durchflussstrecke A im Wesentlichen geradlinig, sodass die Haupt-Durchflussrichtung A des Fluids bzw. Mediums durch die Durchflusseinrichtung 10 im Wesentlichen gleichbleibend ist.

In der in Figur 1 dargestellten Ausführungsform ist die Durchflusseinrichtung 10 einstückig ausgebildet. Die Durchflusseinrichtung 10 kann aber auch modular aufgebaut sein, wobei der erste und zweite Anschluss 12/14 jeweils als Hohlkörper ausgebildet sind und lösbar mit dem Messbereich 16 verbindbar sind. Zur Befestigung bzw. Sicherung des ersten bzw. zweiten Anschlusses 12/14 an dem Messbereich 16 können Sicherungselemente vorgesehen sein. Beispielsweise kann jeder Anschluss 12/14 mit einer Überwurfmutter an dem Messbereich 16 befestigt werden.

Der Messbereich 16 weist einen Messkörper 22 auf, auf den mindestens zwei Kontaktflächen 20 aufgebracht bzw. angebracht sind, wobei die Kontaktflächen 20 nach außen weisen. Insbesondere kann der Normalenvektor jeder Kontaktfläche 20 im Wesentlichen senkrecht zur Haupt-Durchflussrichtung A liegen bzw. senkrecht zur Längsrichtung des Messkörpers 22 liegen. Ferner können sich die mindestens zwei Kontaktflächen 20 zumindest abschnittsweise entlang der Durchflussstrecke A bzw. Haupt-Durchflussrichtung A erstrecken. Bevorzugt sind die Kontaktflächen 20 bezogen auf die Durchflussstrecke A gegenüberliegend angeordnet und verlaufen insbesondere parallel zueinander. In der in Figur 1 dargestellten Ausführungsform weist der Messbereich 16 sechs Kontaktflächen 20 auf, welche in Richtung der Haupt-Durchflussrichtung A gesehen hexagonal angeordnet sind (siehe Fig. 2). Insbesondere bilden jeweils zwei gegenüberliegende Kontaktflächen 20 ein Kontaktflächenpaar, sodass der Messbereich 16 drei Kontaktflächenpaare aufweist.

Ferner kann der Messkörper 22 monolithisch ausgebildet sein und/oder die Durchflussstrecke A entlang der Haupt-Durchflussrichtung zumindest abschnittsweise umschließen.

Die Durchflusseinrichtung 10 kann insbesondere mit einer Durchflussmesseinrichtung (nicht gezeigt) gekoppelt werden. Vorzugsweise kann vorgesehen sein, dass die Durchflussmesseinrichtung ein erstes Gehäuseteil und ein zweites Gehäuseteil, welches relativ zu dem ersten Gehäuseteil bewegbar ist, aufweist, und wobei das erste und zweite Gehäuseteil eine Aufnahme bilden, mit der der Messbereich 22 koppelbar ist. Insbesondere können das erste und zweite Gehäuseteil jeweils eine Ausnehmung aufweisen, die zusammen die Aufnahme für den Messbereich 16 bzw. Messkörper 22 bilden. Im geschlossenen Zustand der Durchflussmesseinrichtung kontaktiert die Aufnahme der Durchflussmesseinrichtung die Kontaktflächen 20, sodass über eine in der Aufnahme vorgesehene Sensorik, beispielsweise ein Ultraschallwandler, ein Eingabesignal, beispielsweise ein Ultraschallsignal, über die Kontaktflächen 20 in den Messbereich 16 eingegeben werden kann. Ferner kann die Sensorik über die Kontaktflächen 20 ein auf dem Eingabesignal basierendes Ausgabesignal empfangen und basierend auf einem Vergleich des Ein- und Ausgabesignals eine fluidbezogene Messgröße bestimmen.

**Figur 2** zeigt eine Querschnittsansicht des Messbereichs 16 entlang der in Figur 1 gezeigten BB Linie. Der Messbereich 16 bzw. der Messkörper 22 kann insbesondere als länglicher Hohlkörper ausgebildet sein, dessen Längsachse im Wesentlichen parallel zu Haupt-Durchflussrichtung A liegt. Dabei bildet der Messkörper 22 einen Teil des Kanals 24 und somit einen Teil der Durchflussstrecke A aus, durch welche das Fluid bzw. Medium strömt. Der Kanal 24 kann ferner von den Kontaktflächen 20 zumindest abschnittsweise entlang der Haupt-Durchflussrichtung A umschlossen werden.

Ferner kann die Durchflussstrecke A im Bereich des Messbereichs 16 bzw. der Kontaktflächen 20 einen im Wesentlichen hexagonalen Querschnitt aufweisen. Die Erfindung ist allerdings nicht auf einen hexagonalen Querschnitt beschränkt. Beispielsweise kann der Querschnitt der Durchflussstrecke A im Bereich des Messbereichs 16 bzw. der Kontaktflächen 20 im Wesentlichen rechteckförmig, insbesondere quadratisch, sein. Dazu kann der Messbereich lediglich vier Kontaktflächen 20 aufweisen, welche im Querschnitt gesehen entsprechend rechteckförmig bzw. quadratisch angeordnet sind.

Des Weiteren sind die Kontaktflächen 20 vorzugsweise rechteckförmig ausgebildet, wobei die Längsrichtung der Kontaktflächen 20 im Wesentlichen parallel zu der Haupt-Durchflussrichtung A des Fluids bzw. Mediums durch die Durchflusseinrichtung 10 verläuft bzw. parallel zur Längsrichtung der Durchflusseinrichtung 10 verläuft.

Die Durchflussmesseinrichtung ist derart ausgebildet, dass deren Aufnahme und insbesondere die Ausnehmungen des ersten und zweiten Gehäuseteils im geschlossenen Zustand der Durchflussmesseinrichtung einen Anpressdruck auf die Kontaktflächen 20 ausübt. Die Kontaktflächen 20 weisen dabei eine Materialbeschaffenheit auf, um bei Vorliegen des Anpressdrucks ein bevorzugt flüssiges Kopplungsmittel abzugeben bzw. abzusondern, welches Hohlräume, die zwischen den Kontaktflächen 20 und der Aufnahme bzw. den Ausnehmungen bestehen, befüllt.

Der von der Durchflussmesseinrichtung auf die Kontaktfläche ausgeübte Anpressdruck kann mindestens etwa 0,7 N/mm², bevorzugt mindestens etwa 1 N/mm² und besonders bevorzugt mindestens etwa 1,3 N/mm² betragen. Insbesondere kann der Anpressdruck dadurch ausgeübt werden, indem der Messbereich gegenüber den Ausnehmungen im geschlossenen Zustand der Durchflussmesseinrichtung ein Übermaß aufweist. Beispielsweise kann die Querschnittsfläche des Messbereichs 16 quer zur Durchflussstrecke A größer sein als die Querschnittsfläche, welche von der Aufnahme bzw. den Ausnehmungen der Durchflussmesseinrichtung eingeschlossen wird.

Vorzugsweise können die mindesten zwei Kontaktflächen 20 ein Elastomer und/oder thermoplastisches Elastomer umfassen, wobei optional das thermoplastische Elastomer aus der Gruppe, bestehend aus Polyetherblockamiden (thermoplastische Polyether Block Amide (TPA)), (Co)Polyestern (thermoplastische Copolyester Elastomere (TPC)), Polyurethanen (thermoplastische Polyurethan Elastomere (TPU)), Polyolefinen (thermoplastische Polyolefine (TPO)), vernetzten thermoplastischen Elastomeren (thermoplastische Elastomere aus Thermoplasten und vulkanisiertem Elastomer (TPV)), Styrol-Blockcopolymeren (thermoplastische Elastomere basierend auf Styrol-Blockcopolymeren (TPS)) und Silikonen, einzeln oder in Kombination ausgewählt ist. Das von den Kontaktflächen abgesonderte Kopplungsmittel kann einen flüssigen oder sich unter Druck verflüssigenden äußeren Weichmacher und/oder Extender umfassen. Ferner kann der flüssige oder sich unter Druck verflüssigende äußere Weichmacher und/oder Extender ölartig sein.

Vorzugsweise kann der Messkörper 22 bei Einwirkung des Anpressdrucks im Wesentlichen formstabil sein. Beispielsweise kann der Messkörper 22 aus einem thermoplastischen Kunststoff, insbesondere aus Polybutylenterephthalat, hergestellt sein. Vorteilhafterweise ermöglicht die formstabile Ausgestaltung des Messkörpers 22, dass der Messkörper 22 aufgrund des Anpressdrucks nicht verformt wird, und der auf die Kontaktflächen 20 wirkende Anpressdruck aufrechterhalten werden kann. Der Messkörper 22 kann bevorzugt durch ein Spritzgussverfahren hergestellt werden, wofür sich Polybutylenterephthalat als Material für den Messkörper 22 besonders gut eignet.

Die Kontaktflächen 20 können eine Länge, in Längsrichtung der Durchflusseinrichtung 10 gesehen, von ungefähr 10 mm bis 50 mm aufweisen und eine Breite, quer zur Längsrichtung der Durchflusseinrichtung 10 gesehen, von ungefähr 3 mm bis 20 mm aufweisen. Ferner können die Kontaktflächen 20 eine minimale Dicke von etwa 1,2 mm und/oder eine maximale Dicke von etwa 1,5 mm aufweisen. Der Abstand A1 zwischen zwei gegenüberliegenden Innenseiten des Kanals 24 kann zwischen 2 mm und 12 mm betragen. Des Weiteren kann der Abstand A2 zwischen den Außenseiten von zwei gegenüberliegenden Kontaktflächen 20 zwischen ungefähr 6 mm und 35 mm betragen.

### Bezugszeichenliste

- 10: Durchflusseinrichtung zum Anordnen an einer fluidführenden Leitung
- 12: erster Anschluss
- 14: zweite Anschluss
- 16: Messbereich
- 18: Schlaucholive
- 20: Kontaktflächen
- 22: Messkörper
- 24: Kanal
- A: Durchflussstrecke bzw. Haupt-Durchflussrichtung/Längsrichtung der Durchflusseinrichtung

## Patentansprüche

1. Durchflusseinrichtung (10) zum Anordnen an einer fluidführenden Leitung und zum Anbringen einer Durchflussmesseinrichtung, insbesondere einer Ultraschall-Durchflussmesseinrichtung, zur Erfassung einer Messgröße des von der Leitung geführten Fluids, wobei die Durchflusseinrichtung aufweist:
- einen ersten und einen zweiten Anschluss (12, 14), mittels derer die Durchflusseinrichtung (10) mit der fluidführenden Leitung verbindbar ist,
- einen zwischen dem ersten Anschluss (12) und dem zweiten Anschluss (14) angeordneten Messbereich (16), der mit der Durchflussmesseinrichtung zum Erfassen der Messgröße koppelbar ist, wobei der erste Anschluss (12), der Messbereich (16) und der zweite Anschluss (14) eine Durchflussstrecke (A) für das Fluid durch die Durchflusseinrichtung (10) festlegen,
wobei der Messbereich (16) mindestens zwei Kontaktflächen (20), die sich zumindest abschnittsweise entlang der Durchflussstrecke erstrecken, zum Kontaktieren der Durchflussmesseinrichtung aufweist,
**dadurch gekennzeichnet, dass**
die mindestens zwei Kontaktflächen (20) dazu ausgelegt sind, bei Einwirken eines Anpressdrucks ein Kopplungsmittel abzusondern.

2. Durchflusseinrichtung (10) nach Anspruch 1, wobei die mindestens zwei Kontaktflächen ein Elastomer und/oder thermoplastisches Elastomer umfassen, wobei optional das thermoplastische Elastomer aus der Gruppe, bestehend aus Polyetherblockamiden, (Co)Polyestern, Polyurethanen, Polyolefinen, vernetzten thermoplastischen Elastomeren, Styrol-Blockcopolymeren und Silikonen, einzeln oder in Kombination ausgewählt ist.

3. Durchflusseinrichtung (10) nach Anspruch 1 oder 2, wobei der Anpressdruck mindesten etwa 0,7 N/mm², bevorzugt mindestens etwa 1 N/mm² und besonders bevorzugt mindestens etwa 1,3 N/mm² beträgt.

4. Durchflusseinrichtung (10) nach einem der vorangegangenen Ansprüche, wobei der Messbereich (16) sechs Kontaktflächen (20) aufweist, die sich zumindest abschnittsweise entlang der Durchflussstrecke (A) erstrecken, wobei die sechs Kontaktflächen (20) derart zueinander angeordnet sind, dass die Durchflusstrecke (A) einen im Wesentlichen hexagonalen Querschnitt, bevorzugt gleichseitigen hexagonalen Querschnitt, aufweist.

5. Durchflusseinrichtung (10) nach einem der vorangegangenen Ansprüche, wobei der Messbereich (16) einen bevorzugt monolithisch ausgebildeten Messkörper (22) aufweist, an dem die Kontaktflächen (20) angebracht sind.

6. Durchflusseinrichtung (10) nach einem der vorangegangenen Ansprüche, wobei der Messkörper (22) bei Einwirkung des Anpressdrucks im Wesentlichen formstabil ist, und/oder wobei der Messkörper (22) aus einem thermoplastischen Kunststoff, insbesondere aus Polybutylenterephthalat, hergestellt ist.

7. Durchflusseinrichtung (10) nach einem der vorangegangenen Ansprüche, wobei das Kopplungsmittel einen flüssigen oder sich unter Druck verflüssigenden äußeren Weichmacher und/oder Extender umfasst, wobei optional der flüssige oder sich unter Druck verflüssigende äußere Weichmacher und/oder Extender ölartig ist.

8. Durchflusseinrichtung (10) nach Anspruch 7, wobei das Kopplungsmittel Weißöl bzw. Paraffin umfasst.

9. Durchflusseinrichtung (10) nach einem der vorangegangenen Ansprüche, wobei der erste Anschluss (12) und der zweite Anschluss (14) lösbar mit dem Messbereich (16) verbindbar sind.

10. System zur Erfassung einer Messgröße des von einer fluidführenden Leitung geführten Fluids, wobei das System aufweist:
- eine Durchflussmesseinrichtung, insbesondere eine Ultraschall-Durchflussmesseinrichtung, zur Erfassung der Messgröße, und
- eine Durchflusseinrichtung (10) nach einem der vorangegangenen Ansprüche,
wobei die Durchflussmesseinrichtung derart ausgebildet ist, dass durch Kopplung der Durchflussmesseinrichtung mit dem Messbereich (16), die Durchflussmesseinrichtung mindestens den Anpressdruck auf die mindestens zwei Kontaktflächen (20) ausübt.

11. System nach Anspruch 10, wobei die Durchflussmesseinrichtung eine Aufnahme für den Messbereich (16) aufweist, wobei in einem geöffneten Zustand der Durchflussmesseinrichtung der Messbereich (16) von der Aufnahme aufnehmbar ist und/oder von der Aufnahme entnehmbar ist, und wobei in einem geschlossenen Zustand der Durchflussmesseinrichtung der Messbereich (16) zumindest abschnittsweise entlang der Durchflussstrecke (A) von der Durchflussmesseinrichtung umschlossen ist.

12. System nach Anspruch 11, wobei der Messbereich (16) quer zur Durchflussstrecke (A) gesehen ein Übermaß gegenüber der Aufnahme im geschlossenen Zustand der Durchflussmesseinrichtung aufweist.

13. System nach Anspruch 11 oder 12, wobei die Aufnahme im geschlossenen Zustand der Durchflussmesseinrichtung einen im Wesentlichen hexagonalen Querschnitt, bevorzugt gleichseitigen hexagonalen Querschnitt, aufweist.

14. System nach einem der vorangegangenen Ansprüche 11 bis 13, wobei die Durchflussmesseinrichtung ein erstes Gehäuseteil und ein zweites Gehäuseteil, welches relativ zu dem ersten Gehäuseteil bewegbar ist, aufweist, und wobei das erste und zweite Gehäuseteil zusammen die Aufnahme für den Messbereich (16) bilden.

15. Verwendung einer Durchflusseinrichtung (10) nach einem der Ansprüche 1 bis 9, zur Erfassung einer Messgröße des von einer fluidführenden Leitung geführten Fluids, wobei vorgesehen ist:
- Anordnen der Durchflusseinrichtung (10) an der Leitung;
- Anbringen einer Durchflussmesseinrichtung an dem Messbereich (16), wobei durch das Anbringen der Durchflussmesseinrichtung an dem Messbereich (16), die Durchflussmesseinrichtung mindestens den Anpressdruck auf die Kontaktflächen (20) ausübt.

## Claims

1. Flow-through device (10) for arranging on a fluid-conducting line and for attaching a flowmeter, in particular an ultrasonic flowmeter, for detecting a measurement variable of the fluid conducted by the line, the flow-through device comprising:
- a first and a second connector (12, 14), by means of which the flow-through device (10) can be connected to the fluid-conducting line,
- a measurement region (16) arranged between the first connector (12) and the second connector (14), which measurement region can be coupled to the flowmeter for detecting the measurement variable, wherein the first connector (12), the measurement region (16) and the second connector (14) define a flow path (A) for the fluid through the flow-through device (10),
wherein the measurement region (16) comprises at least two contact surfaces (20), which extend along at least part of the flow path, for contacting the flowmeter,
**characterized in that**
the at least two contact surfaces (20) are designed to secrete a coupling medium under the effect of a pressing force.

2. Flow-through device (10) according to claim 1, wherein the at least two contact surfaces comprise an elastomer and/or thermoplastic elastomer, wherein optionally the thermoplastic elastomer is selected from the group consisting of polyether block amides, (co)polyesters, polyurethanes, polyolefins, crosslinked thermoplastic elastomers, styrene block copolymers and silicones, individually or in combination.

3. Flow-through device (10) according to claim 1 or 2, wherein the pressing force is at least around 0.7 N/mm², preferably at least around 1 N/mm², and particularly preferably at least around 1.3 N/mm².

4. Flow-through device (10) according to any one of the preceding claims, wherein the measurement region (16) comprises six contact surfaces (20), which extend along at least part of the flow path (A), wherein the six contact surfaces (20) are arranged relative to one another in such a way that the flow path (A) has a substantially hexagonal cross-section, preferably an equilateral hexagonal cross-section.

5. Flow-through device (10) according to any one of the preceding claims, wherein the measurement region (16) comprises a preferably monolithic measurement body (22), to which the contact surfaces (20) are attached.

6. Flow-through device (10) according to any one of the preceding claims, wherein the measurement body (22) is substantially dimensionally stable under the effect of the pressing force, and/or wherein the measurement body (22) is made of a thermoplastic, in particular of polybutylene terephthalate.

7. Flow-through device (10) according to any one of the preceding claims, wherein the coupling medium comprises an external plasticizer and/or extender which is liquid or which liquefies under pressure, wherein optionally the external plasticizer and/or extender which is liquid or which liquefies under pressure is oil-like.

8. Flow-through device (10) according to claim 7, wherein the coupling medium comprises white oil or paraffin.

9. Flow-through device (10) according to any one of the preceding claims, wherein the first connector (12) and the second connector (14) can be detachably connected to the measurement region (16).

10. System for detecting a measurement variable of the fluid conducted by a fluid-conducting line, the system comprising:
- a flowmeter, in particular an ultrasonic flowmeter, for detecting the measurement variable, and
- a flow-through device (10) according to any one of the preceding claims,
wherein the flowmeter is designed in such a way that, by coupling the flowmeter to the measurement region (16), the flowmeter exerts at least the pressing force on the at least two contact surfaces (20).

11. System according to claim 10, wherein the flowmeter has a receptacle for the measurement region (16), wherein, in an open state of the flowmeter, the measurement region (16) can be received by the receptacle and/or can be removed from the receptacle, and wherein, in a closed state of the flowmeter, the measurement region (16) is enclosed by the flowmeter along at least part of the flow path (A).

12. System according to claim 11, wherein the measurement region (16), viewed transversely to the flow path (A), is oversized in relation to the receptacle in the closed state of the flowmeter.

13. System according to claim 11 or 12, wherein, in the closed state of the flowmeter, the receptacle has a substantially hexagonal cross-section, preferably an equilateral hexagonal cross-section.

14. System according to any one of the preceding claims 11 to 13, wherein the flowmeter comprises a first housing part and a second housing part, which is movable relative to the first housing part, and wherein the first and the second housing part together form the receptacle for the measurement region (16).

15. Use of a flow-through device (10) according to any one of claims 1 to 9 for detecting a measurement variable of the fluid conducted by a fluid-conducting line, wherein it is provided to:
- arrange the flow-through device (10) on the line;
- attach a flowmeter to the measurement region (16), wherein, by attaching the flowmeter to the measurement region (16), the flowmeter exerts at least the pressing force on the contact surfaces (20).

## Revendications

1. Système d'écoulement (10) à disposer sur une conduite de guidage de fluide et pour le montage d'un système de mesure de débit, en particulier un système de mesure de débit par ultrasons, pour l'acquisition d'une grandeur de mesure du fluide guidé par la conduite, dans lequel le système d'écoulement présente :
- un premier et un deuxième raccord (12, 14), au moyen desquels le système d'écoulement (10) peut être relié à la conduite de guidage de fluide,
- une zone de mesure (16) disposée entre le premier raccord (12) et le deuxième raccord (14), qui peut être couplée au système de mesure de débit pour acquérir la grandeur de mesure, dans lequel le premier raccord (12), la zone de mesure (16) et le deuxième raccord (14) définissent un trajet d'écoulement (A) pour le fluide à travers le système d'écoulement (10),
dans lequel la zone de mesure (16) présente au moins deux surfaces de contact (20), qui s'étendent au moins sur certaines parties le long du trajet d'écoulement, pour la mise en contact avec le système de mesure de débit,
**caractérisé en ce que** les au moins deux surfaces de contact (20) sont conçues pour séparer un moyen de couplage lorsqu'une force de pression agit.

2. Système d'écoulement (10) selon la revendication 1, dans lequel les au moins deux surfaces de contact comprennent un élastomère et/ou élastomère thermoplastique, dans lequel facultativement l'élastomère thermoplastique est sélectionné dans le groupe constitué par les polyéthers blocks amides, (co)polyesters, polyuréthanes, polyoléfines, élastomères thermoplastiques réticulés, copolymères séquencés styrènes et silicones, seuls ou en combinaison.

3. Système d'écoulement (10) selon la revendication 1 ou 2, dans lequel la force de pression est égale à au moins environ 0,7 N/mm², de préférence au moins environ 1 N/mm² et de manière particulièrement préférée au moins environ 1,3 N/mm².

4. Système d'écoulement (10) selon l'une quelconque des revendications précédentes, dans lequel la zone de mesure (16) présente six surfaces de contact (20), qui s'étendent au moins sur certaines parties le long du trajet d'écoulement (A), dans lequel les six surfaces de contact (20) sont disposées les unes par rapport aux autres de telle sorte que le trajet d'écoulement (A) présente une section transversale sensiblement hexagonale, de préférence section transversale hexagonale équilatérale.

5. Système d'écoulement (10) selon l'une quelconque des revendications précédentes, dans lequel la zone de mesure (16) présente un corps de mesure (22) réalisé de préférence de façon monolithique, sur lequel les surfaces de contact (20) sont montées.

6. Système d'écoulement (10) selon l'une quelconque des revendications précédentes, dans lequel le corps de mesure (22) est sensiblement indéformable lorsque la force de pression agit, et/ou dans lequel le corps de mesure (22) est fabriqué à partir d'une matière thermoplastique, en particulier à partir de polybutylène térephthalate.

7. Système d'écoulement (10) selon l'une quelconque des revendications précédentes, dans lequel le moyen de couplage comprend un plastifiant et/ou une charge extérieur(e) liquide ou se liquéfiant sous la pression, dans lequel facultativement le plastifiant extérieur et/ou la charge liquide ou se liquéfiant sous la pression sont huileux.

8. Système d'écoulement (10) selon la revendication 7, dans lequel le moyen de couplage comprend de l'huile blanche ou de la paraffine.

9. Système d'écoulement (10) selon l'une quelconque des revendications précédentes, dans lequel le premier raccord (12) et le deuxième raccord (14) peuvent être reliés de manière détachable à la zone de mesure (16).

10. Système pour l'acquisition d'une grandeur de mesure du fluide guidé par une conduite de guidage de fluide, dans lequel le système présente :
- un système de mesure de débit, en particulier un système de mesure de débit par ultrasons, pour l'acquisition de la grandeur de mesure, et
- un système d'écoulement (10) selon l'une quelconque des revendications précédentes, dans lequel le système de mesure de débit est réalisé de telle sorte que par couplage du système de mesure de débit avec la zone de mesure (16), le système de mesure de débit exerce au moins la force de pression sur les au moins deux surfaces de contact (20).

11. Système selon la revendication 10, dans lequel le système de mesure de débit présente un logement pour la zone de mesure (16), dans lequel dans un état ouvert du système de mesure de débit la zone de mesure (16) peut être reçue par le logement et/ou peut être retirée du logement, et dans lequel dans un état fermé du système de mesure de débit la zone de mesure (16) est entourée au moins sur certaines parties le long du trajet d'écoulement (A) par le système de mesure de débit.

12. Système selon la revendication 11, dans lequel la zone de mesure (16) vue transversalement par rapport au trajet d'écoulement (A) présente un surdimensionnement par rapport au logement dans l'état fermé du système de mesure de débit.

13. Système selon la revendication 11 ou 12, dans lequel le logement dans l'état fermé du système de mesure de débit présente une section transversale sensiblement hexagonale, de préférence une section transversale hexagonale équilatérale.

14. Système selon l'une quelconque des revendications précédentes 11 à 13, dans lequel le système de mesure de débit présente une première partie de boîtier et une deuxième partie de boîtier, laquelle est mobile par rapport à la première partie de boîtier, et dans lequel la première et deuxième partie de boîtier forment conjointement le logement pour la zone de mesure (16).

15. Utilisation d'un système d'écoulement (10) selon l'une quelconque des revendications 1 à 9, pour l'acquisition d'une grandeur de mesure du fluide guidé par une conduite de guidage de fluide, dans lequel il est prévu :
- la disposition du système d'écoulement (10) sur la conduite ;
- le montage d'un système de mesure de débit sur la zone de mesure (16), dans laquelle par le montage du système de mesure de débit sur la zone de mesure (16), le système de mesure de débit exerce au moins la force de pression sur les surfaces de contact (20).
